# EUROPEAN PATENT SPECIFICATION

(11) **EP 4 129 446 B1**
(45) Date of publication and mention of the grant of the patent: **28.02.2024**
(21) Application number: 22183756.0
(22) Date of filing: 08.07.2022
(51) Int. Cl.: B01D 46/00, B01D 46/10

(54) **FILTER FRAME**
RAHMEN FÜR FILTER
CADRE DE FILTRE

(30) Priority: 05.08.2021 IT 202100021323
(43) Date of publication of application: 08.02.2023
(73) Proprietor: Sifa Technology S.r.l., 60041 Sassoferrato (AN) (IT)
(72) Inventor: FEDELI, Federico, 60040 GENGA (AN) (IT); LATINI, Simone, 60019 SENIGALLIA (AN) (IT)
(74) Representative: Cutropia, Gianluigi

(56) References cited:
- WO-A1-03/013695
- JP-A- H07 299 317
- JP-A- 2005 069 510
- US-A- 2 405 293

## Description

The present invention relates to a frame for a filter, specifically an air filter, for instance an air filter for air handling units.

Filters in the form of rectangular panels, in which multilayer filtering elements are enclosed in a rectangular frame, are known.

Such a rectangular filter frame is obtained from four sections that are joined together by means of connecting elements.

The sections have a tubular structure with tubular seats at the ends; therefore, they are obtained by extrusion.

The connecting element generally has an L-shape with tabs that are engaged in the tubular seats at the ends of the sections. In this way two sections are joined at 90°.

Figs. 1 and 2 illustrate a first type of frame (200) according to the prior art, which includes a connecting element (202) between two sections (201), in which the connecting element (202) is exposed.

Figs. 3 and 4 illustrate a second type of frame (300) according to the prior art, which includes a connecting element (302) between two sections (301), in which the connecting element (302) is concealed inside the tubular seats of the sections.

In the first type of frame (200), the section (201) is easier to handle, as the operator has to make a simple 90° cut at the ends of the section. However, such a frame (200) has many possible leakage points from the filter. More precisely, two leakage zones (Z1, Z2) are formed for each corner of the frame, with a total of eight leakage zones. Of said eight leakage zones, only four leakage zones are sealed during the successive production steps of the filter (gluing of the filtering pack to the frame); the other four leakage zones require a specific sealing action.

In the second type of frame (300), the ends of the sections (301) are cut at 45° and are disposed in contact to each other. This generates only one leakage zone (Z) in the connection of two sections, with a total of four leakage zones. However, cutting the section at 45° requires more attention and a longer time, with a consequent economic impact. In addition, two connecting elements are needed to join two sections (302). Thus, the second type of frame (300) is safer, but more expensive than the first type of frame (200).

In both cases, the user needs to stock two different types of sections (201, 301) and two different types of connecting elements (201, 302) that are not interchangeable with each other, in case one type of section or one type of connecting element is missing.

JPH07299317A describes a filter frame comprising four sections, with a U-shaped cross-section, which are arranged at right angles. Said sections are obtained by profiling and are therefore identical and have neither recessed seats nor knurling at the ends. One end of a section is fitted next to one end of another section, and the two ends of the two sections are fixed together by means of welding points. Such a frame is impaired by some drawbacks. The assembly of the frame requires a welding machine. A critical point for the filter seal is created in the area where the ends of the sections are overlapped. The frame is assembled permanently, and therefore the frame cannot be disassembled.

JP2005069510A describes a filter frame comprising two side sections and transverse sections arranged at right angle. All sections have a U-shaped cross-section. However, the side sections are different from the transverse sections. In fact, only the side sections have ends with recessed seats that accommodate the ends of the transverse sections. The ends of the sections have no knurling. The sections are joined to each other by means of screws threaded into holes obtained in the side sections and in the transverse sections. Such a frame is impaired by some drawbacks. The sections are different from each other, resulting in the need to have several different pieces in stock. In addition, the assembly of such a frame requires screws and therefore a screwing tool.

The purpose of the present invention is to eliminate the drawbacks of the prior art by providing a filter frame that is versatile, practical, efficient, reliable, inexpensive, and easy to make and install.

Another purpose is to provide such a frame that uses identical sections and that can be assembled easily and quickly without the use of welding, screws, or special devices and tools.

These purposes are achieved in accordance with the invention with the features of the appended independent claims.

Advantageous achievements of the invention appear from the dependent claims.

The frame according to the invention is defined in independent claim 1.

Such a frame has no connecting elements and is provided with only one type of section that embeds the connecting element at one end. Since the entire frame can be made with only one type of section, the operator will not have to handle different items in stock.

The frame according to the invention has only four leakage zones that are automatically sealed in the successive production step when the filtering pack is glued to the frame.

Such a section has been designed in such a way that it does not need to be cut at 45°. A simple 90° cut of the section is sufficient to obtain the desired length and width of the frame.

Since the connecting element is embedded in the section, the management of the stock is not a problem. Moreover, the final frame will have at least four components less compared to the frames of the prior art, with a consequent cost saving.

Because of its geometry, the section of the frame according to the invention can be produced by injection molding and does not need to be made by extrusion, since it does not have tubular structure (which is used in the existing solutions to create the seats at the ends of the section). This originates a component that, for the same size, requires less raw material compared to the sections of the prior art, hence a lighter, cheaper and less environmentally impactful finished product compared to the frames of the prior art is obtained.

Additional features of the invention will become clearer from the following detailed description, which refers to its merely illustrative and therefore nonlimiting embodiments, illustrated in the accompanying drawings, wherein:

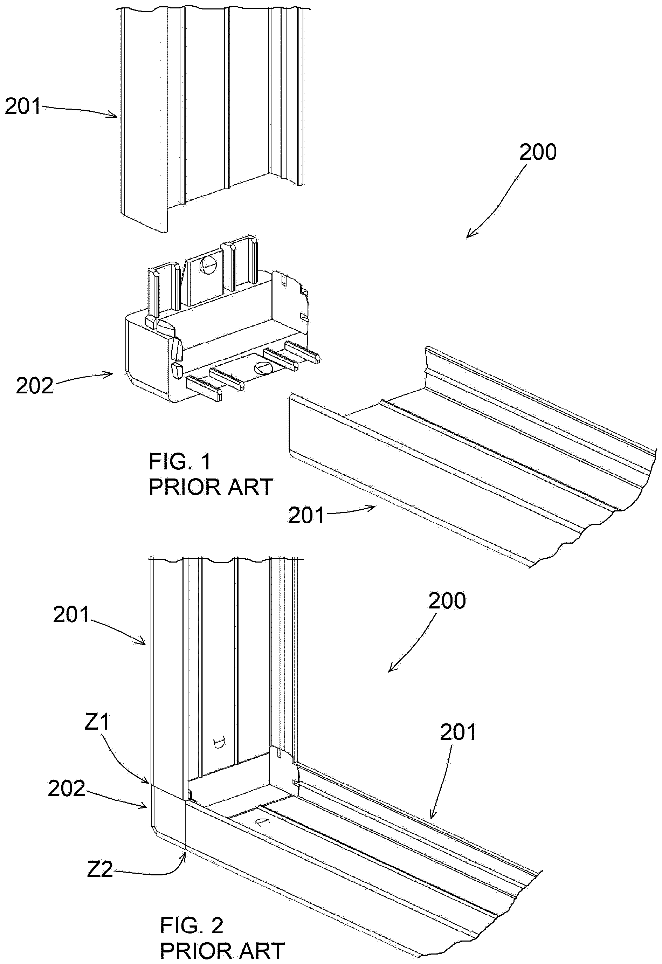

Figs. 1 and 2 are perspective views, respectively an exploded view and an assembled view, of a portion of a first type of frame according to the prior art;

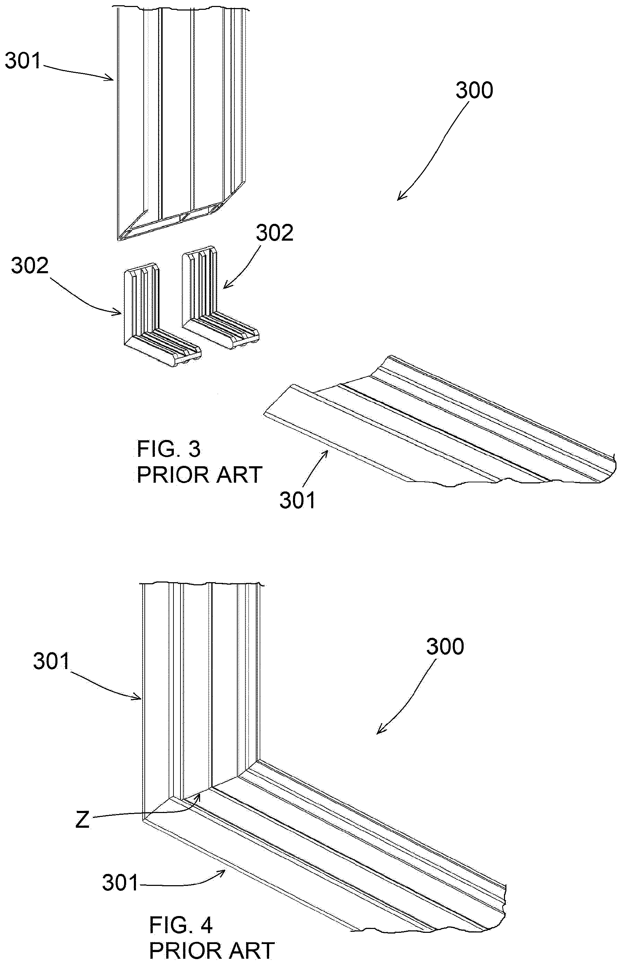

Figs. 3 and 4 are perspective views, respectively an exploded view and an assembled view, of a portion of a second type of frame according to the prior art;

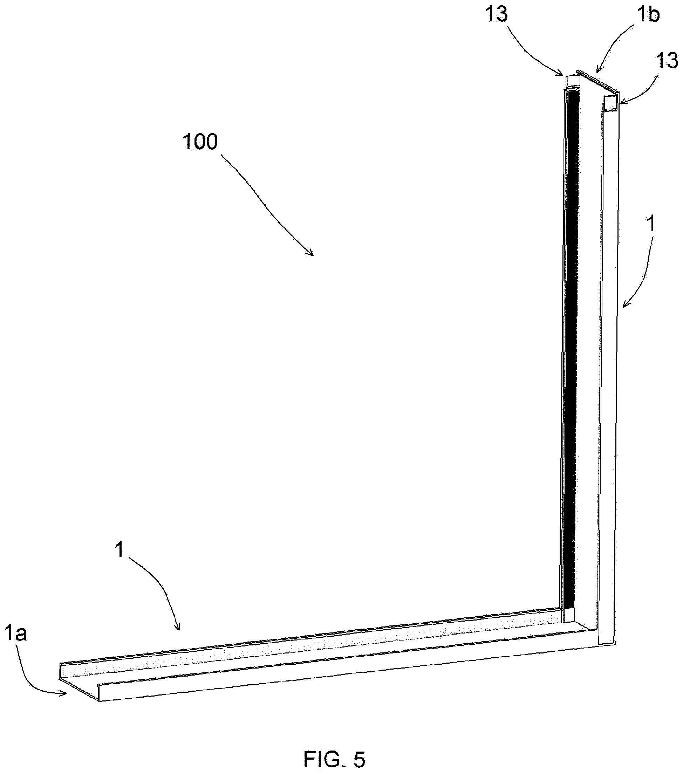

Fig. 5 is a perspective view of a portion of a frame according to the invention, comprising two sections assembled together;

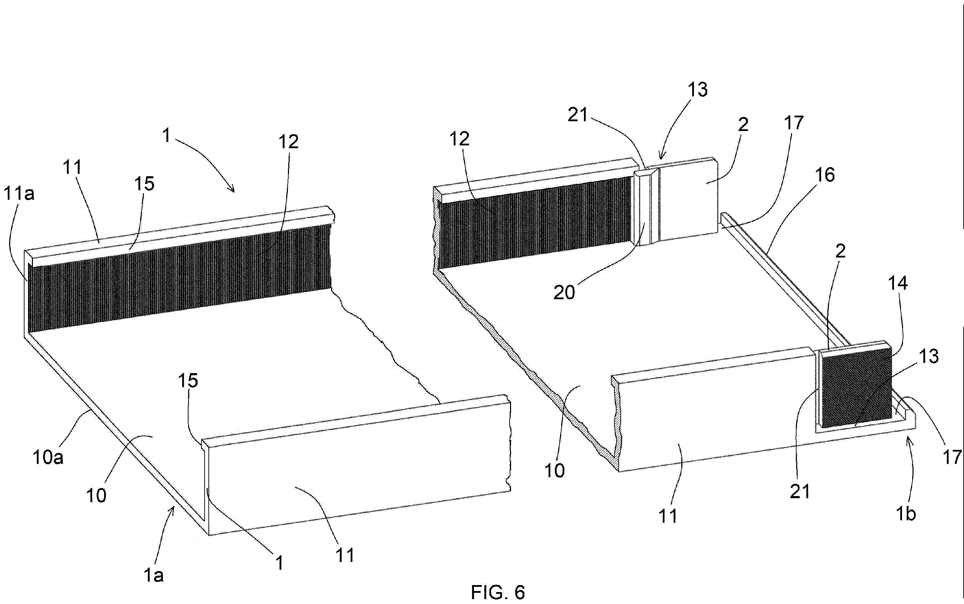

Fig. 6 is a partially interrupted perspective view of a section of the frame according to the invention;

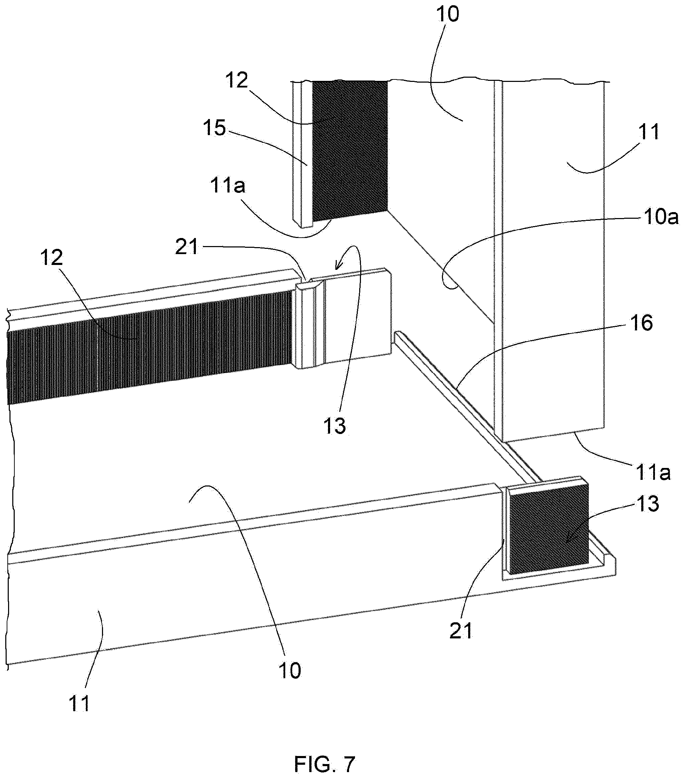

Fig. 7 is an exploded perspective view of two partially interrupted sections of the frame according to the invention;

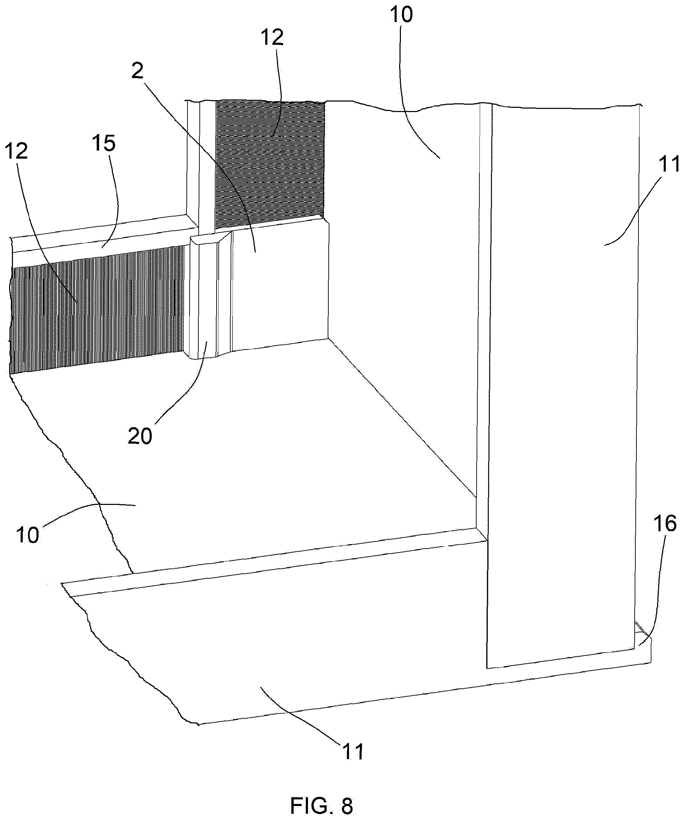

Fig. 8 is a perspective view of two sections of the frame according to the invention, which are partially interrupted and assembled;

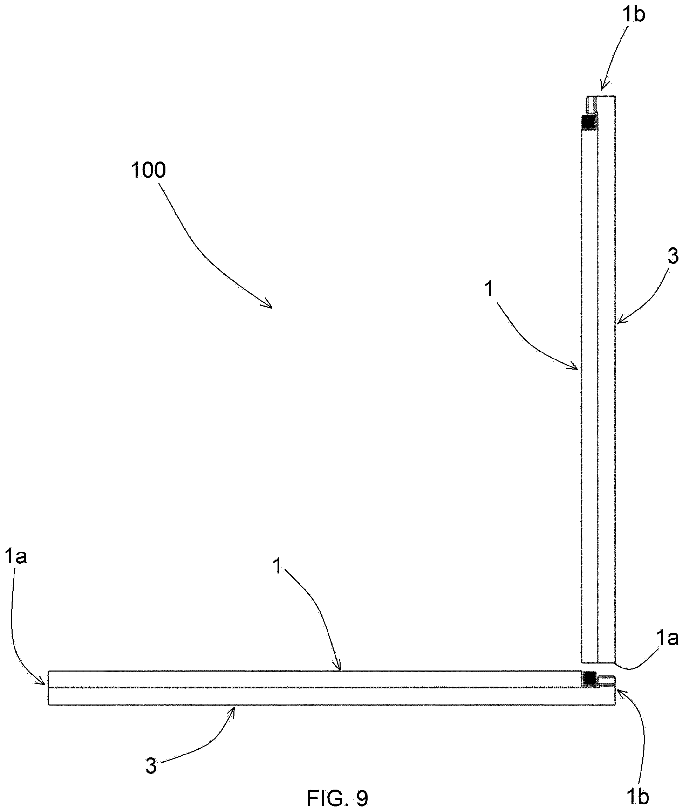

Fig. 9 is an exploded side view of two sections of a frame according to a variant of the invention;

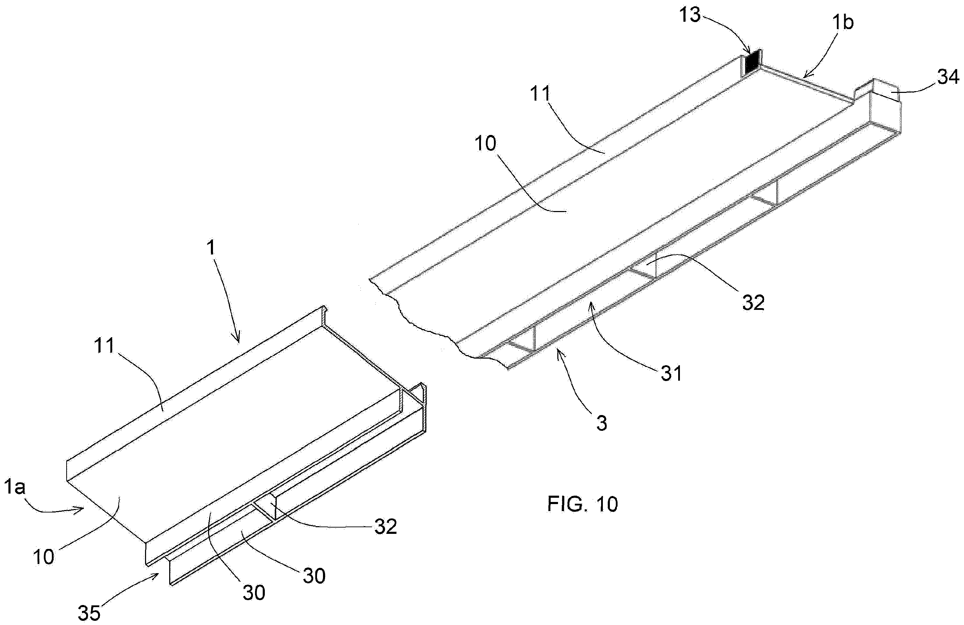

Fig. 10 is a perspective bottom view of a partially interrupted section of the frame of Fig. 9;

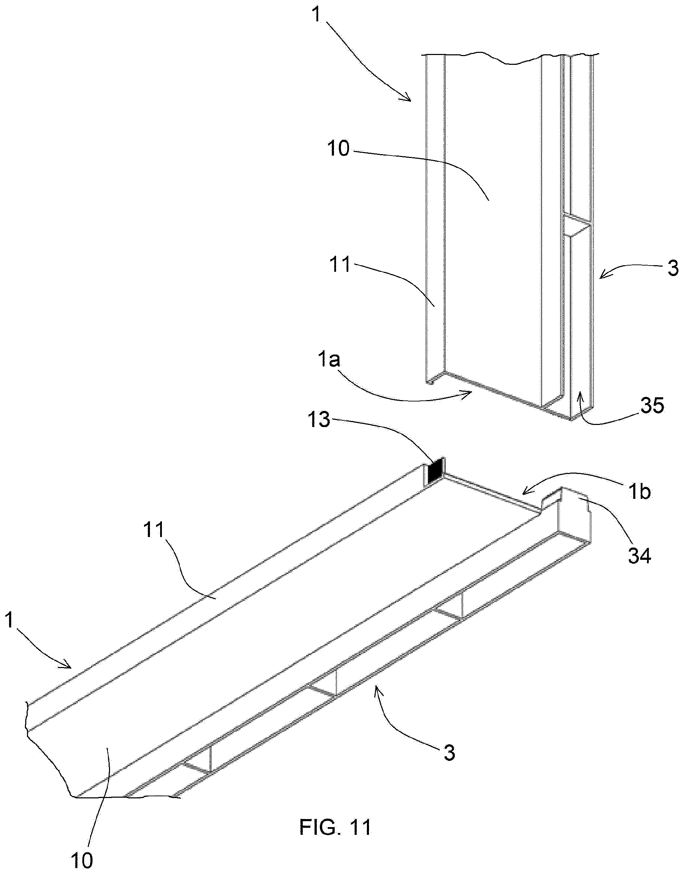

Fig. 11 is an exploded perspective bottom view of two sections of the frame of Figs. 9 and 10; and

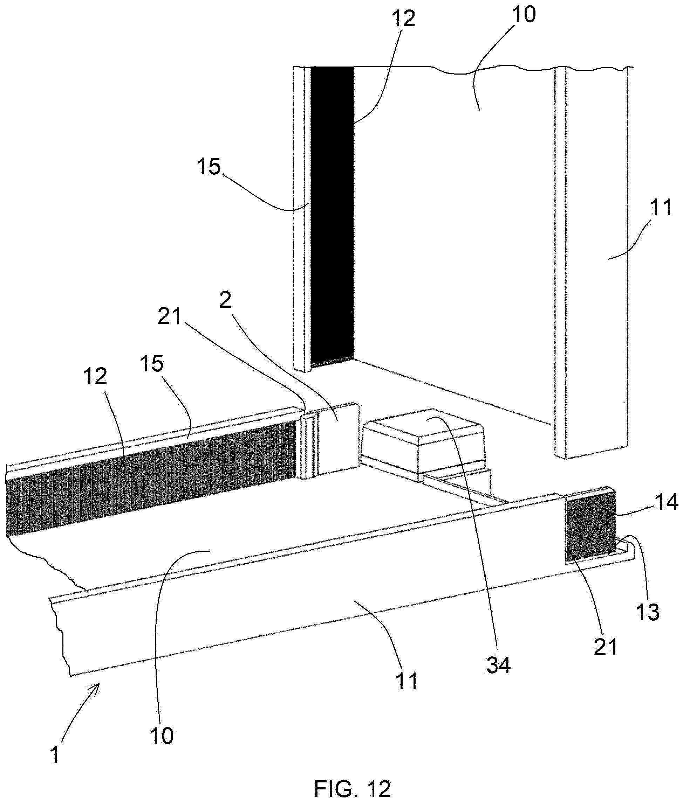

Fig. 12 is an exploded perspective top view of the two sections of Fig. 11.

With reference to Figs. 5-8, a first embodiment of a filter frame according to the invention is described, indicated overall by reference number 100.

The frame (100) comprises four sections (1) that are joined together at their ends in such a way to form a rectangular or square frame that encloses a filtering element in the shape of a rectangular or square panel. The sections (1) have the same shape, but may have different lengths. The sections (1) are made from an original section obtained by injection molding, which is cut at 90° to obtain a section (1) of desired length.

Referring to Fig. 6, each section includes a rectangular bottom wall (10) and two side walls (11) that rise orthogonally from the bottom wall (10). In this way, the section has a U-shaped cross-section.

Each side wall (11) has an internal knurled surface (12). The internal surface is the surface facing the bottom wall (10), that is, the inside of the section, whereas the external surface is the surface facing the outside of the section. A knurled surface is a surface provided with a series of parallel and closely spaced ribs and grooves (the distance between the ribs is less than 1 mm) obtained by means of a knurling process.

The section (1) has a first end (1a) and a second end (1b).

In the first end (1a) of the section, edges (11a) of the side walls (11) are flush with an edge (10a) of the bottom wall (10).

In the second end (1b) of the section, in correspondence with the side walls (11), there are recessed seats (13) that are open outwards so as to define a step on the side walls. The recessed seats (13) have external knurled surfaces (14). Each recessed seat (13) has a length equal to the height of the side walls (11) and a depth equal to the thickness of the side walls (11).

With reference to Fig. 7, when a second section is arranged orthogonally on a first section, the edges (11a) of the side walls in the first end of the second section enter the recessed seats (13) of the second end of the first section. In this way, the internal knurled surface (12) of the side walls (11) of the second section comes in contact with the external knurled surface (14) of the recessed seats of the first section, generating friction between the two knurled surfaces. The provision of the knurled surfaces (12, 14) on the side walls of the section and on the recessed seats of the section allows for perfectly sealing the sections, avoiding the use of welds and screws as in the filter frames of the prior art.

Each recessed seat (13) of a section is obtained by means of a tab (2) arranged on the bottom wall (10) in correspondence with the second end (1b) of the section. The tab (2) is parallel to the side wall (11), but spaced from a side edge of the bottom wall (10) by a distance equal to the thickness of the side wall (11), in such a way to create the recessed seat (13).

The tab (2) includes a connecting portion (20) that connects the tab (2) to the side wall (11). Between the tab (2) and the side wall (11) there is an outer groove (21), in correspondence with the connecting portion (20).

Each side wall (11) has a longitudinal rib (15) that projects inward from a longitudinal edge of the side wall (11). Thus, when a second section is arranged orthogonally on a first section, the longitudinal ribs (15) of the side walls (1) of the second section enter the outer grooves (21) of the first section.

Each section (1) has a transverse rib (16) that protrudes superiorly from the bottom wall (10) in correspondence with the second end (10b) of the section.

The transverse rib (16) is disposed at a distance from the tabs (2) so as to generate a gap (17) between the transverse rib (16) and the tabs (2). The gap (17) has a width equal to the thickness of the bottom wall (10). Thus, when a second section is arranged orthogonally on a first section, the edge (10a) of the bottom wall of the second section is fitted inside the gap (17) of the first section.

Figs. 9-12 illustrate a variant of the section (1) used to obtain the frame (100) according to the invention, wherein elements that are identical to or correspond with those already described are indicated with the same reference numbers, omitting their detailed description.

The section (1) includes a box rib (3) protruding externally from the bottom wall of the section. The box rib (3) extends longitudinally along the entire length of the section, near a side edge of the section.

The box rib (3) includes two side walls (30) that define an externally open channel (31). Partitions (32) are arranged in the channel (31).

The box rib (3) ends with a tang (34) having a square or rectangular cross-section, which protrudes superiorly from the bottom wall (10) at the second end (1b) of the section. The box rib (3) has an opening (35) at the first end (1a) of the section.

When a second section is arranged orthogonally on a first section, the tang (34) of the first section is engaged in the opening (35) of the second section.

Numerous variations and modifications may be made to the present embodiments of the invention, within the reach of a person skilled in the art, which are still falling within the scope of the invention, as expressed by the appended claims.

## Claims

1. Filter frame (100) comprising four sections (1) joined at their ends in such a way to form a rectangular or square frame that contains a filtering element shaped like a rectangular or square panel,
wherein each section (1) comprises a rectangular bottom wall (10) and two side walls (11) that rise orthogonally from the bottom wall (10);
the section (1) has a first end (1a) and a second end (1b);
the first end (1a) of the section has edges (11a) of the side walls (11) flush with an edge (10a) of the bottom wall (10);
**characterized in that**
the second end (1b) of the section has recessed seats (13), which are open outwards, in correspondence with the side walls (11), so that to define a step on the side walls;
when a second section is arranged orthogonally on a first section, the edges (11a) of the side walls in the first end of the second section enter the recessed seats (13) of the second end of the first section;
wherein each side wall (11) has an internal knurled surface (12) and each recessed seat (13) has an external knurled surface (14).

2. The frame (100) of claim 1, wherein said internal knurled surface (12) of the side wall (11) of the section and said external knurled surface (14) of the recessed seat (13) comprise a series of ribs and grooves parallel and close to each other, which are obtained by means of a knurling process.

3. The frame (100) of claim 1 or 2, wherein each recessed seat (13) has a length equal to the height of the side walls (11) and a depth equal to the thickness of the side walls (11).

4. The frame (100) according to any one of the preceding claims, wherein each recessed seat (13) of a section is obtained by means of a tab (2) disposed on the bottom wall (10) in correspondence with the second end (1b) of the section.

5. The frame (100) of claim 4, wherein said tab (2) is disposed parallel to the side wall (11) and spaced from a side edge of the bottom wall (10) by a distance equal to the thickness of the side wall (11) so as to create said recessed seat (13).

6. The frame (100) of claim 4 or 5, wherein said tab (2) comprises a connecting portion (20) that connects said tab (2) to the side wall (11).

7. The frame (100) of claim 6, wherein an external groove (21) is provided between the tab (2) and the side wall (11), in correspondence with the connecting portion (20), and each side wall (11) has a longitudinal rib (15) that projects inwardly from a longitudinal edge of the side wall (11) so that, when a second section is arranged orthogonally on a first section, the longitudinal ribs (15) of the side walls (11) of the second section enter the external grooves (21) of the first section.

8. The frame (100) according to any one of claims 4 to 7, wherein each section (1) has a transverse rib (16) that projects superiorly from the bottom wall (10) in correspondence with the second end (10b) of the section; said transverse rib (16) being disposed at a distance from the tabs (2) so as to generate a gap (17) between the transverse rib (16) and the tabs (2); said gap (17) having a width equal to the thickness of the bottom wall (10) so that, when a second section is arranged orthogonally on a first section, the edge (10a) of the bottom wall of the second section is engaged in the gap (17) of the first section.

9. The frame (100) according to any one of the preceding claims, wherein said section (1) comprises a box rib (3) that projects externally from the bottom wall of the section and extends longitudinally along the entire length of the section, near a side edge of the section; said box rib (3) comprising two side walls (30) that define an externally open channel (31).

10. The frame (100) of claim 9, wherein said box rib (3) terminates with a shank (34), having a square or rectangular cross-section, which protrudes superiorly from the bottom wall (10) in correspondence with the second end (1b) of the section and said box rib (3) has an opening (35) in correspondence with the first end (1a) of the section so that, when a second section is arranged orthogonally on a first section, the shank (34) of the first section is engaged in the opening (35) of the second section.

## Patentansprüche

1. Filterrahmen (100), umfassend vier Profile (1), die an ihren Endabschnitten so zusammengefügt sind, dass ein rechteckiger oder ein quadratischer Rahmen gebildet wird, der ein Filterelement in Form einer rechteckigen oder quadratischen Platte aufnimmt,
wobei jedes Profil (1) eine rechteckige Bodenwand (10) und zwei Seitenwände (11) umfasst, die rechtwinklig aus der Bodenwand (10) aufragen;
das Profil (1) einen ersten Endabschnitt (1a) und einen zweiten Endabschnitt (1b) aufweist;
der erste Endabschnitt (1a) des Profils Kanten (11a) der Seitenwände (11) aufweist, die bündig mit einer Kante (10a) der Bodenwand (10) sind;
**dadurch gekennzeichnet, dass**
der zweite Endabschnitt (1b) des Profils eingelassene Sitze (13) aufweist, die nach außen, an den Seitenwänden (11) offen sind, so dass eine Stufe auf den Seitenwänden definiert wird;
wenn ein zweites Profil rechtwinklig auf einem ersten Profil angeordnet ist, die Kanten (11a) der Seitenwände im ersten Endabschnitt des zweiten Profils in die eingelassenen Sitze (13) des zweiten Endabschnitts des ersten Profils eindringen;
wobei jede Seitenwand (11) eine gerändelte Innenoberfläche (12) aufweist und jeder eingelassene Sitz (13) eine gerändelte Außenoberfläche (14) aufweist.

2. Rahmen (100) nach Anspruch 1, wobei die gerändelte Innenoberfläche (12) der Seitenwand (11) des Profils und die gerändelte Außenoberfläche (14) des eingelassenen Sitzes (13) eine Reihe von parallel und nahe nebeneinander angeordneten Rippen und Nuten aufweisen, die durch Rändelung erhalten werden.

3. Rahmen (100) nach Anspruch 1 oder 2, wobei jeder eingelassene Sitz (13) eine Länge aufweist, die der Höhe der Seitenwände (11) entspricht, und eine Tiefe, die der Dicke der Seitenwände (11) entspricht.

4. Rahmen (100) nach einem der vorstehenden Ansprüche, wobei jeder eingelassene Sitz (13) eines Profils mittels einer Lasche (2) erhalten wird, die auf der Bodenwand (10) an dem zweiten Endabschnitt (1b) des Profils angeordnet ist.

5. Rahmen (100) nach Anspruch 4, wobei die Lasche (2) parallel zu der Seitenwand (11) angeordnet ist und von einer Seitenkante der Bodenwand (10) in einem Abstand beabstandet ist, der der Dicke der Seitenwand (11) entspricht, so dass der eingelassene Sitz (13) gebildet wird.

6. Rahmen (100) nach Anspruch 4 oder 5, wobei die Lasche (2) einen Verbindungsabschnitt (20) umfasst, der die Lasche (2) mit der Seitenwand (11) verbindet.

7. Rahmen (100) nach Anspruch 6, wobei zwischen der Lasche (2) und der Seitenwand (11) eine äußere Nut (21) an dem Verbindungsabschnitt (20) vorgesehen ist und wobei jede Seitenwand (11) eine Längsrippe (15) aufweist, die nach innen aus einer Längskante der Seitenwand (11) vorsteht, so dass, wenn ein zweites Profil rechtwinklig auf einem ersten Profil so angeordnet ist, die Längsrippen (15) der Seitenwände (11) des zweiten Profils in die äußeren Nuten (21) des ersten Profils eindringen.

8. Rahmen (100) nach einem der Ansprüche 4 bis 7, wobei jedes Profil (1) eine Querrippe (16) aufweist, die an dem zweiten Endabschnitt (10b) des Profils nach oben aus der Bodenwand (10) vorsteht; wobei die Querrippe (16) in einem Abstand von den Laschen (2) so angeordnet ist, dass ein Zwischenraum (17) zwischen der Querrippe (16) und den Laschen (2) gebildet wird; wobei der Zwischenraum (17) eine Breite aufweist, die der Dicke der Bodenwand (10) entspricht, so dass, wenn ein zweites Profil rechtwinklig auf einem ersten Profil angeordnet wird, die Kante (10a) der Bodenwand des zweiten Profils in den Zwischenraum (17) des ersten Profils einrastet.

9. Rahmen (100) nach einem der vorstehenden Ansprüche, wobei das Profil (1) eine kastenförmige Rippe (3) umfasst, die aus der Bodenwand des Profils nach außen vorsteht und sich in Längsrichtung über die gesamte Länge des Profils nahe einer Außenkante des Profils erstreckt; wobei die kastenförmige Rippe (3) zwei Seitenwände (30) umfasst, die eine nach außen offene Rinne (31) definieren.

10. Rahmen (100) nach Anspruch 9, wobei die kastenförmige Rippe (3) in einem Schaft (34) endet, der einen quadratischen oder rechteckigen Querschnitt aufweist, an dem zweiten Endabschnitt (1b) des Profils nach oben aus der Bodenwand (10) vorsteht und wobei die kastenförmige Rippe (3) eine Öffnung (35) an dem ersten Endabschnitt (1a) des Profils aufweist, so dass, wenn ein zweites Profil rechtwinklig auf einem ersten Profil angeordnet ist, der Schaft (34) des ersten Profils in die Öffnung (35) des zweiten Profils einrastet.

## Revendications

1. Châssis (100) pour filtre comprenant quatre profilés (1) joints entre eux aux extrémités de manière à obtenir un cadre rectangulaire ou carré qui renferme un élément filtrant en forme de panneau rectangulaire ou carré,
où chaque profilé (1) comprend une paroi de fond rectangulaire (10) et deux parois latérales (11) qui se dressent orthogonalement depuis la paroi de fond (10) ;
le profilé (1) a une première extrémité (1a) et une seconde extrémité (1b) ;
la première extrémité (1a) du profilé a des bords (11a) des parois latérales (11) qui affleurent avec un bord (10a) de la paroi de fond (10) ;
**caractérisé en ce que**
la seconde extrémité (1b) du profilé a des emplacements creux (13), ouverts vers l'externe, en correspondance des parois latérales (11), de manière à définir un gradin sur les parois latérales ;
quand un second profilé est disposé orthogonalement sur un premier profilé, les bords (11a) des parois latérales dans la première extrémité du second profilé entrent dans les emplacements creux (13) de la seconde extrémité du premier profilé ;
où chaque paroi latérale (11) a une surface interne moletée (12) et chaque emplacement creux (13) a une surface externe moletée (14).

2. Châssis (100) selon la revendication 1, où ladite surface interne moletée (12) de la paroi latérale (11) du profilé et ladite surface externe moletée (14) de l'emplacement creux (13) comprennent une série de nervures et de rainures parallèles et rapprochées entre elles, obtenues à l'aide d'un processus de moletage.

3. Châssis (100) selon la revendication 1 ou 2, où chaque emplacement creux (13) a une longueur égale à la hauteur des parois latérales (11) et une profondeur égale à l'épaisseur des parois latérales (11).

4. Châssis (100) selon l'une quelconque des revendications précédentes, où chaque emplacement creux (13) d'un profilé est obtenu moyennant une ailette (2) disposée sur la paroi de fond (10) en correspondance de la seconde extrémité (1b) du profilé.

5. Châssis (100) selon la revendication 4, où ladite ailette (2) est disposée parallèle à la paroi latérale (11) et écartée d'un bord latéral de la paroi de fond (10) d'une distance égale à l'épaisseur de la paroi latérale (11), de manière à créer ledit emplacement creux (13).

6. Châssis (100) selon la revendication 4 ou 5, où ladite ailette (2) comprend une section de raccord (20) qui la relie à la paroi latérale (11).

7. Châssis (100) selon la revendication 6, où entre ladite ailette (2) et la paroi latérale (11) il y a une rainure externe (21), en correspondance de la section de raccord (20), et chaque paroi latérale (11) a une nervure longitudinale (15) qui fait saillie vers l'intérieur de puis un bord longitudinal de la paroi latérale (11), de manière que, quand un second profilé est disposé orthogonalement sur un premier profilé, les nervures longitudinales (15) des parois latérales (11) du second profilé entrent dans les rainures externes (21) du premier profilé.

8. Châssis (100) selon l'une quelconque des revendications de 4 à 7, où chaque profilé (1) a une nervure transversale (16) qui fait saillie supérieurement de la paroi de fond (10) en correspondance de la seconde extrémité (10b) du profilé ; ladite nervure transversale (16) étant disposée à une certaine distance des ailettes (2) de manière à créer un écart (17) entre la nervures transversale (16) et les ailettes (2) ; ledit écart (17) ayant une ampleur égale à l'épaisseur de la paroi de fond (10), de manière que, quand un second profilé est disposé orthogonalement sur un premier profilé, le bord (10a) de la paroi de fond du second profilé s'encastre dans l'écart (17) du premier profilé.

9. Châssis (100) selon l'une quelconque des revendications précédentes, où ledit profilé (1) comprend une nervure de forme rectangulaire (3) qui fait saillie extérieurement de la paroi de fond du profilé et qui se déploie longitudinalement sur toute la longueur du profilé, à proximité d'un bord latéral du profilé ; ladite nervure de forme rectangulaire (3) comprenant deux parois latérales (30) qui définissent un canal (31) ouvert extérieurement.

10. Châssis (100) selon la revendication 9, où ladite nervure de forme rectangulaire (3) termine avec une tige (34), ayant une section transversale carrée ou rectangulaire, qui fait saillie supérieurement de la paroi de fond (10), en correspondance de la seconde extrémité (1b) du profilé, et ladite nervure de forme rectangulaire (3) a une embouchure (35) en correspondance de la première extrémité (1a) du profilé, de manière que, quand un second profilé est disposé orthogonalement sur un premier profilé, la tige (34) du premier profilé s'engage dans l'embouchure (35) du second profilé.
